# EUROPÄISCHE PATENTSCHRIFT

(11) **EP 2 912 544 B1**
(45) Veröffentlichungstag und Bekanntmachung des Hinweises auf die Patenterteilung: **10.01.2018**
(21) Anmeldenummer: 13779152.1
(22) Anmeldetag: 26.09.2013
(51) Int. Cl.: G06F 9/44, H04W 88/02, H04L 29/08, H04L 29/06, B60K 37/00

(54) **VORRICHTUNG UND VERFAHREN ZUR BEREITSTELLUNG MULTIMEDIALER DATEN IN EINEM KRAFTFAHRZEUG**
DEVICE AND METHOD FOR PROVIDING MULTIMEDIA DATA IN A MOTOR VEHICLE
DISPOSITIF ET PROCÉDÉ DE PRÉSENTATION DE DONNÉES MULTIMÉDIA DANS UN VÉHICULE À MOTEUR

(30) Priorität: 25.10.2012 DE 102012020974
(43) Veröffentlichungstag der Anmeldung: 02.09.2015
(73) Patentinhaber: VOLKSWAGEN AKTIENGESELLSCHAFT, 38440 Wolfsburg (DE)
(72) Erfinder: KRÜGER, Martin, 38550 Isenbüttel (DE)
(86) Internationale Anmeldenummer: PCT/EP2013/070026
(87) Internationale Veröffentlichungsnummer: WO 2014/063896

(56) Entgegenhaltungen:
- JAHNICH ET AL.: "Integrating Dynamic Load Balancing Strategies into the Car-Network", 4TH IEEE INTERNATIONAL SYMPOSIUM ON ELECTRONIC DESIGN, TEST AND APPLICATIONS, 2008, XP002716064, in der Anmeldung erwähnt
- Qnx Software Systems: "QNX CAR 2.0 for EcoCAR 2", , 6. September 2012 (2012-09-06), XP055087103, Gefunden im Internet: URL:https://community.freescale.com/servle t/JiveServlet/previewBody/96203-102-1-9168 /QNX%20CAR%202%20for%20EcoCar.pdf [gefunden am 2013-11-07]
- Andy Gryc ET AL: "Warum HTML5 die HMI-Technologie der Zukunft ist", , 18. Juli 2012 (2012-07-18), XP055087122, Gefunden im Internet: URL:http://www.qnx.com/download/download/2 3790/qnx_html5_hmi_de.pdf [gefunden am 2013-11-07]

## Beschreibung

Ausführungsbeispiele der vorliegenden Erfindung betreffen Vorrichtungen und Verfahren zur Bereitstellung multimedialer Daten in einem Kraftfahrzeug (Kfz), wie sie insbesondere bei sogenannten Infotainmentsystemen (Infotainment: zusammengesetzt aus Information und Entertainment) zum Einsatz kommen können.

In modernen Kraftfahrzeugen ist es üblich, Informationen, wie z. B. Fahrzeugzustandsinformationen und Unterhaltung (Entertainment) über ein gemeinsames System aus Bedien- und Anzeigeelementen zugänglich zu machen. Ein solches System wird im allgemeinen Sprachgebrauch als Infotainmentsystem bezeichnet. Derartige Infotainmentsysteme bieten beispielsweise Zugriff auf Betriebs- und Fahrdatenanzeigen, Navigation mit Telemetrie, Fahrwerkseinstellungen und Servicefunktionen, Mobiltelefon und Internet, Audio/Video, etc. Je nach Fahrzeugtyp und/oder Fahrzeugklasse kann ein Infotainmentsystem aus einem fest in einem Fahrzeug installierten Kombiinstrument mit entsprechenden Anzeige- und Bedieneinheiten, wie z. B. einem Multifunktionslenkrad, bestehen. In einem derartigen Kombünstrument kann beispielsweise die Funktionalität eines Navigationssystems und eines Mobiltelefons, eines Radio-/TV-Tuners, etc. zusammengefasst sein. Allerdings können bei anderen Ausführungsformen die einzelnen Komponenten auch durch separate Geräte realisiert werden, welche dann aber - wenn überhauptnur begrenzt miteinander in Verbindung stehen.

Solche Infotainmentsysteme aus separaten Geräten werden beispielsweise in Jahnich, I. et al.: "Integrating Dynamic Load Balancing Strategies into the Car-Network", 4th IEEE International Symposium on Electronic Design, Test and Applications, 2008, oder Bose, R. et al.: "Morphing Smartphones into Automotive Application Platforms", Computer Vol. 44, May 2011, No. 5, S. 53 - 61, beschrieben.

Ausführungsbeispiele der vorliegenden Erfindung adressieren insbesondere Nachteile der erstgenannten fest installierten Kombigeräte, die im Allgemeinen mit den schnellen Entwicklungs- und Produktzyklen der Telekommunikations- und Internetbranche nicht Schritt halten können. So sind beispielsweise Navigationsanwendungen fest installierter Navigationsgeräte nach einiger Zeit sowohl im Hinblick auf ihren Bedienkomfort und/oder die Aktualität des verwendeten Kartenmaterials nicht mehr auf dem neuesten Stand. Audio- und/oder Video-Wiedergabefunktionalitäten sind nach einiger Zeit ebenso technisch nicht mehr auf dem neuesten Stand, so dass es vorkommen kann, dass neuere Audio- bzw. Video-Formate von älteren Kfz-Infotainmentsystemen nicht unterstützt werden und somit eine Wiedergabe von neueren Audio- oder Videodaten unmöglich ist.

Separate Geräte, wie z.B. Smartphones, sind zwar oft auf technisch dem neuesten Stand, jedoch können sie nur unzureichend mit den fest installierten Infotainment-Komponenten gekoppelt werden, so dass beispielsweise eine Wiedergabe externer Daten auf einer fest installierten Infotainment-Anzeige oder über fest installierten Lautsprecher nicht oder nur unzureichend möglich ist.

Es ist daher eine Aufgabe der vorliegenden Erfindung, den Stand der Technik von Infotainmentsystemen, insbesondere Kfz-Infotainmentsystemen, im Hinblick auf deren Flexibilität und Aktualität weiterzubilden.

Diese Aufgabe wird gelöst durch eine Vorrichtung und ein Verfahren zur Bereitstellung multimedialer Daten in einem Kraftfahrzeug, jeweils mit den Merkmalen der unabhängigen Patentansprüche.

Gemäß einem Kerngedanken der vorliegenden Erfindung kann ein Kfz-Infotainmentsystem als ein verteiltes System mit einer Mehrzahl verschiedener und verteilter Instanzen bzw. Systemkomponenten realisiert werden. Dabei meint "verteilt" örtlich nicht auf einen Punkt, wie z.B. das Kfz, festgelegt, sondern einzelne Komponenten bzw. Instanzen des Systems bzw. Netzwerks können sich an verschiedenen, unter Umständen weit voneinander entfernten Orten befinden - ähnlich wie bei verteilten Rechnernetzwerken.

Eine erste Instanz des verteilten Infotainmentsystems wird gemäß Ausführungsbeispielen durch fahrzeugseitige bzw. fahrzeuginterne Hard- und/oder Softwarekomponenten bereitgestellt. Wenigstens eine zweite Instanz des verteilten Systems wird durch fahrzeugexterne Hard- und/oder Softwarekomponenten bereitgestellt. Hier bedeutet "fahrzeugintern" in dem Kfz fest installiert, wie z.B. eine Anzeige in einer Mittelkonsole des Fahrzeugs. "Fahrzeugextern" hingegen bedeutet nicht fest in dem Kfz installiert, wie z.B. ein portables Gerät, welches leicht in das Kfz einbringbar und wieder entnehmbar ist. Die fahrzeuginternen und fahrzeugexternen Hard- und/oder Softwarekomponenten kommunizieren über wenigstens eine Schnittstelle miteinander.

Das verteilte Infotainmentsystem ist gemäß Ausführungsbeispielen der vorliegenden Erfindung unter anderem dadurch gekennzeichnet, dass ein und dieselbe Computerprogrammanwendung, die im Folgenden auch als Widget oder Applet bezeichnet wird, von verschiedenen Instanzen bzw. Komponenten des verteilten Infotainmentsystems ausgeführt werden kann. Es kann also ausgewählt werden, ob die Computerprogrammanwendung von einer fahrzeuginternen Hardwarekomponente des Infotainmentsystems ausgeführt wird, oder ob die Computerprogrammanwendung bzw. Softwarekomponente von einer fahrzeugexternen Hardwarekomponente des Infotainmentsystems ausgeführt werden soll. Dementsprechend können auch Daten, auf welche das Infotainmentsystem zugreifen können soll, entweder fahrzeugintern oder fahrzeugextern gespeichert werden.

Ausführungsbeispiele der vorliegenden Erfindung ermöglichen durch die verteilte Systemarchitektur ein skalierbares Infotainmentsystem, so dass die Art und/oder die Anzahl der Computerprogrammanwendungen, welche auf fahrzeuginternen Hardwarekomponenten ablaufen, an deren Leistungsfähigkeit angepasst werden kann. Auf einer hardwaremäßig leistungsfähigen fahrzeuginternen Hardware (z.B. in Bezug auf Prozessor- und/oder Speicherleistung) können beispielsweise mehr oder rechenintensivere Programme ausgeführt werden, als auf einer ressourcenschwachen fahrzeuginternen Hardware. Im letzteren Fall können speicher- und/oder rechenintensive Anwendungen jedoch auf wenigstens einer zweiten Instanz des verteilten Systems, nämlich einer fahrzeugexternen Hardware, ausgeführt werden, sodass die Anwendungen dem Nutzer des verteilten Infotainmentsystems über diesen Weg und die Schnittstelle im Fahrzeug zur Verfügung steht.

Gemäß einem ersten Aspekt der vorliegenden Erfindung wird eine Vorrichtung zur Bereitstellung multimedialer Daten in einem Kraftfahrzeug bereitgestellt. Die Vorrichtung umfasst wenigstens eine fahrzeuginterne Hardware- bzw. Systemkomponente zum Bereitstellen einer ersten Laufzeitumgebung zur Unterstützung wenigstens einer Computerprogrammanwendung, auf der wenigstens einen fahrzeuginternen Hardwarekomponente. Ferner umfasst die Vorrichtung eine Schnittstelle zu wenigstens einer fahrzeugexternen Hardware- bzw. Systemkomponente, welche eine zweite Laufzeitumgebung zur Unterstützung der wenigstens einen Computerprogrammanwendung auf der wenigstens einen fahrzeugexternen Hardwarekomponente bereitstellt. Ferner ist eine Auswahleinrichtung vorgesehen, die ausgebildet ist, um zum Ausführen der wenigstens einen Computerprogrammanwendung, entweder die fahrzeuginterne oder die fahrzeugexterne Hardwarekomponente auszuwählen.

Die wenigstens eine fahrzeuginterne Hardwarekomponente kann gemäß Ausführungsbeispielen einen im Kfz fest installierten Prozessor und/oder einen Datenspeicher und/oder eine Anzeigeeinrichtung eines Kfz-Infotainmentsystems umfassen. Demgegenüber kann die wenigstens eine fahrzeugexterne Hardwarekomponente einen im Kfz nicht fest installierten Prozessor und/oder einen Datenspeicher und/oder eine Anzeigeeinrichtung des Kfz-Infotainmentsystems umfassen. Die fahrzeugexterne Hardwarekomponente kann also ein tragbares Gerät, wie z.B. ein Smartphone, ein Tablet-PC, ein Laptop-Computer oder dergleichen sein. Ebenso kann fahrzeugexterne Hardwarekomponente ein Webserver sein, der einen speziellen Infotainment-Online Dienst zur Verfügung stellt. Unabhängig von der Hardware-Plattform, auf welcher die Computerprogrammanwendung ausgeführt wird, können daraus resultierende Ergebnisdaten vermittels der Schnittstelle im Fahrzeug über die fahrzeuginterne Hardwarekomponente wiedergegeben werden.

Zwischen der Computerprogrammanwendung (z.B. Widget, Applet, etc.) und der jeweiligen Hardware bzw. dem jeweiligen Betriebssystem, vermitteln hardware- bzw. betriebssystemspezifische Laufzeitumgebungen (Englisch: Runtime Environment) auf den verschiedenen Instanzen/Komponenten des verteilten Infotainmentsystems. Das bedeutet, dass die erste Laufzeitumgebung zwischen der Computerprogrammanwendung und einem ersten Betriebssystem der fahrzeuginternen Hardwarekomponente vermittelt und dass die zweite Laufzeitumgebung zwischen der Computerprogrammanwendung und einem zweiten Betriebssystem der fahrzeugexternen Hardwarekomponente, wie z. B. einem Smartphone, vermittelt. Dadurch kann die Computerprogrammanwendung unabhängig von den unterschiedlichen Hardwarekomponenten bzw. Betriebssystemen erstellt werden und gegebenenfalls zwischen den verschiedenen Komponenten kopiert oder verschoben werden.

Ausführungsbeispiele der vorliegenden Erfindung erlauben es, die Prozessor- und/oder Speicherleistung der fahrzeuginternen Infotainmentsystemkomponente sehr flexibel bzw. skalierbar zu machen. So können die fahrzeuginternen Hardwarekomponenten bei manchen Ausführungsbeispielen vergleichsweise leistungsschwach ausgeführt werden, da in diesem Fall die wenigstens eine Computeranwendung, wie z. B. ein sogenanntes Applet oder Widget, auf der fahrzeugexternen Hardwarekomponente ausgeführt werden kann. Die Schnittstelle zwischen fahrzeuginterner und fahrzeugexterner Komponente braucht in diesem Fall lediglich von der extern laufenden Computerprogrammanwendung gelieferte Ergebnisdaten, z.B. dekodierte Audio-/Videodaten oder Ortsinformationen, von der fahrzeugexternen zur fahrzeuginternen Hardwarekomponente übertragen, um sie dort (im Fahrzeug) über ein fahrzeuginternes Ausgabegerät (z.B. Display, Lautsprecher, etc.) auszugeben. Wie bereits erwähnt wurde, kann die wenigstens eine fahrzeugexterne Hardwarekomponente beispielsweise ein portables Gerät mit wenigstens einem Prozessor und einem Datenspeicher zum Ausführen der wenigstens einen Computerprogrammanwendung umfassen, wie z. B. ein Laptop-Computer oder ein Smartphone. Zusätzlich oder alternativ kann die wenigstens eine fahrzeugexterne Hardwarekomponente einen fahrzeugexternen Webserver umfassen, um von dem Kfz aus über die Schnittstelle auf von dem Webserver bereitgestellte Daten und/oder Anwendungen eines Internet-Dienstes zugreifen zu können.

In anderen Worten ausgedrückt bedeutet dies, dass bei Ausführungsbeispielen der vorliegenden Erfindung entschieden werden kann, ob ein und dieselbe Anwendung (App) des Kfz-Infotainmentsystems entweder auf der fahrzeuginternen Hardware oder auf der fahrzeugexternen Hardware ausgeführt wird. Unabhängig davon können die aus der Anwendung resultierenden Daten fahrzeugintern wiedergegeben werden. Man macht sich also Hardware-Ressourcen eines verteilten Netzwerks zunutze.

Vorzugsweise weist die Infotainmentvorrichtung eine fahrzeuginterne zentrale Bedien- und Anzeigeeinrichtung auf, von der aus von dem verteilten Infotainmentsystem auszuführende Anwendungen bedient werden können und auf der von den Anwendungsprogrammen bereitgestellte Informationen ausgegeben werden können. Da es bei Ausführungsbeispielen keine Rolle spielt, ob eine Computeranwendung letztendlich auf der fahrzeuginternen oder der fahrzeugexternen Hardware- bzw. Systemkomponente ausgeführt wird, ist die Schnittstelle gemäß manchen Ausführungsbeispielen ausgebildet, um von einer auf der fahrzeugexternen Hardware laufenden Computerprogrammanwendung erzeugte Daten auf die fahrzeuginterne Hardware übertragen zu können, so dass die fahrzeuginterne Hardware die empfangenen Daten darstellen bzw. wiedergeben kann. Derartige Daten können beispielsweise auf der fahrzeugexternen Hardware dekodierte Audio- oder Videodaten sein, ebenso wie von einer auf der externen Hardware laufenden Navigationssoftware bereitgestellte Positionsdaten, welche dann von einem fahrzeuginternen Display des Infotainmentsystems angezeigt werden. Einen Benutzer des verteilten Infotainmentsystems braucht es nicht zu interessieren, ob eine momentan laufende Infotainment-Anwendung auf der lokalen bzw. fahrzeuginternen oder der fahrzeugexternen Hardware, wie z. B. einem Smartphone oder einem entfernten Rechner, ausgeführt wird. Das Ergebnis ist davon weitgehend unabhängig.

Gemäß manchen Ausführungsbeispielen kann die Vorrichtung ausgebildet sein, um über die Schnittstelle eine Konfigurationseinstellung von der fahrzeugexternen Hardwarekomponente, z.B. einem Webserver, zu empfangen. Dabei kann die Konfigurationseinstellung Informationen über die wenigstens eine ausführende Computerprogrammanwendung und/oder wiederzugebende multimediale Daten aufweisen. Es ist also gemäß manchen Ausführungsbeispielen möglich, das verteilte Kfz-Infotainmentsystem beispielsweise über einen Online-Dienst zu konfigurieren. Über einen derartigen Online-Dienst kann ein Benutzer des Infotainmentsystems also festlegen, welchen Funktionsumfang sein System haben soll. Beispielsweise kann er eine Navigationsanwendung, eine Audio-/Video-Wiedergabeanwendung und eine Wetterabfrageanwendung als diejenigen Computerprogrammanwendungen festlegen, welche von seinem Infotainmentsystem ausführbar sein sollen. Dabei ist es denkbar, dass die Konfiguration Informationen darüber enthält, welche Anwendung auf welcher Hardware (intern oder extern) laufen soll. Beispielsweise könnte festgelegt werden, dass die Navigationssoftware auf der fahrzeuginternen Hardware abläuft, während eine Wiedergabesoftware auf einem mit dem Fahrzeug über die Schnittstelle gekoppelten Smartphone bereitgestellt wird. Generell sind bei der Auswahl der Hardwarekomponenten bzw. der Zuordnung von Anwendungssoftware zu Hardwarekomponente eine Vielzahl von Varianten denkbar. Beispielsweise kann die Auswahleinrichtung ausgebildet sein, um die fahrzeuginterne Hardwarekomponente dann auszuwählen, wenn Hardware-Ressourcen der fahrzeuginternen Hardware für die Ausführung der wenigstens einen Computerprogrammanwendung ausreichend sind. Ansonsten werden die fahrzeugexternen Hardwarekomponenten, wie z. B. Smartphone und/oder Webserver ausgewählt. Die Auswahl kann beispielsweise manuell oder last-spezifisch erfolgen. Wenn also beispielsweise bei einem Start einer Anwendung erkannt wird, dass die Hardware-Ressourcen der fahrzeuginternen Hardware nicht (mehr) für deren Ausführung ausreichen, kann die Anwendung stattdessen auf der fahrzeugexternen Hardware (z.B. Smartphone) gestartet werden. Es ist ebenso denkbar, dass die Auswahl manuell vom Benutzer vorgenommen werden kann, beispielsweise über eine Bedienoberfläche des Infotainmentsystems im Fahrzeug oder über den Online-Dienst. Wird beispielsweise festgestellt, dass ein mit dem Fahrzeug gekoppeltes Smartphone nur noch eine begrenzte Akkulaufzeit aufweist, so kann eine vom Benutzer gewünschte Anwendungssoftware stattdessen auf der fahrzeuginternen Hardware des verteilten Infotainmentsystems gestartet werden. Ebenso sind Ausführungsbeispiele denkbar, bei denen eine bereits laufende Software, d. h. ein aktiver Prozess, während seiner Laufzeit von einer Hardwarekomponente zu einer anderen Hardwarekomponente des verteilten Infotainmentsystems portiert bzw. migriert wird.

Die Schnittstelle kann durch ein Framework bzw. Programmiergerüst, wie z. B. Java-Script, eindeutig definierbar sein und damit ebenfalls eine plattformunabhängige Ausführbarkeit garantieren. Gemäß Ausführungsbeispielen kann die Schnittstelle von der ersten Laufzeitumgebung und der wenigstens einen fahrzeugexternen Hardwarekomponente bzw. der zweiten Laufzeitumgebung bereitgestellt werden. Für den Austausch von Informationen zwischen den verschiedenen Instanzen des verteilten Infotainmentsystems können verschiedene Technologien eingesetzt werden. Beispielsweise kann die Schnittstelle auf dem Representational State Transfer (REST) Programmierparadigma und wenigstens einem standardisierten Netzwerkprotokoll passieren, wie z. B. HTTP (Hypertext Transfer Protocol, Hypertext-Übertragungsprotokoll) und/oder WebSocket. Über die Schnittstelle ist es also möglich, Anwendungen und/oder Dateien, wie z. B. Musikdateien, zwischen den verteilten Systemkomponenten auszutauschen.

Das verteilte Infotainmentsystem gemäß Ausführungsbeispielen der vorliegenden Erfindung setzt natürlich eine Verbindung bzw. Konnektivität zwischen der fahrzeuginternen und der fahrzeugexternen Hardwarekomponente voraus. Bei fehlender Konnektivität zwischen den verschiedenen Systemkomponenten des verteilten Systems, kann es dazu kommen, dass Ergebnisse einer Computerprogrammanwendung im Fahrzeug bzw. auf der fahrzeuginternen Hardwarekomponente nicht zur Verfügung stehen, wenn die Computerprogrammanwendung auf einer fahrzeugexternen Komponente läuft. Beispielsweise können Audiodaten, welche auf einem externen Webserver einer Rechner-Wolke (Cloud) gespeichert sind, nicht wiedergegeben werden, wenn eine Verbindung zwischen der fahrzeuginternen Hardwarekomponente des Infotainmentsystems und dem Webserver abreißt. Für einen derartigen Fall können bestimmte, für einen Nutzer interessante Daten lokal in einem fahrzeuginternen Datenspeicher gespeichert werden, um diese Daten auch ohne Konnektivität, d.h. offline, zur Verfügung stellen zu können. Gemäß einem Ausführungsbeispiel kann die Vorrichtung also einen fahrzeuginternen Datenspeicher aufweisen, um, für den Fall einer fehlenden Konnektivität zwischen der fahrzeuginternen und der fahrzeugexternen Hardwarekomponente, multimediale Daten und/oder Anwendungsdaten von der fahrzeugexternen Hardwarekomponente in den fahrzeuginternen Datenspeicher zu kopieren.

Gemäß einem weiteren Aspekt der vorliegenden Erfindung wird auch ein Kraftfahrzeug mit einer erfindungsgemäßen Vorrichtung zur Bereitstellung multimedialer Daten in dem Kraftfahrzeug bereitgestellt. In anderen Worten ausgedrückt, umfasst ein derartiges Kraftfahrzeug eine erste fahrzeuginterne Hardware- bzw. Systemkomponente des erfindungsgemäßen verteilten Infotainmentsystems. Die fahrzeuginterne Hardwarekomponente dient zum Bereitstellen einer ersten Laufzeitumgebung zur Unterstützung einer Computerprogrammanwendung auf der fahrzeuginternen Hardwarekomponente. Ferner umfasst das Kraftfahrzeug die Schnittstelle zu wenigstens einer weiteren fahrzeugexternen Hardware- bzw. Systemkomponente des verteilten Infotainmentsystems. Diese fahrzeugexterne Hardwarekomponente kann gemäß Ausführungsbeispielen beispielsweise ein in dem Fahrzeug vorhandenes Smartphone des Fahrzeugführers und/oder einen entfernten Webserver zur Bereitstellung von Daten und/oder Diensten aus der Internet-Cloud aufweisen. Die fahrzeugexterne Hardwarekomponente weist eine zweite Laufzeitumgebung zur Unterstützung derselben Computerprogrammanwendung auf der fahrzeugexternen Hardwarekomponente auf. Zudem ist für das Fahrzeug eine Auswahleinrichtung vorgesehen, die ausgebildet ist, um zum Ausführen der Computerprogrammanwendung entweder die fahrzeuginterne oder die fahrzeugexterne Hardware auszuwählen, beispielsweise je nach von der jeweiligen Hardware bereitgestellten Hardwareressourcen.

Gemäß einem noch weiteren Aspekt der Erfindung wird ein Verfahren zur Bereitstellung multimedialer Daten in einem Kraftfahrzeug vorgeschlagen, wobei das Kraftfahrzeug eine fahrzeuginterne Hardwarekomponente aufweist, welche eine erste Laufzeitumgebung zur Unterstützung einer Computerprogrammanwendung auf der kraftfahrzeuginternen Hardwarekomponente bereitstellt. Dabei weist das Verfahren einen Schritt des Bereitstellens einer Schnittstelle zwischen der wenigstens einen fahrzeuginternen Hardwarekomponente und wenigstens einer fahrzeugexternen Hardwarekomponente auf, welche eine zweite Laufzeitumgebung zur Unterstützung der Computerprogrammanwendung auf der fahrzeugexternen Hardwarekomponente bereitstellt. Ferner umfasst das Verfahren einen Schritt des Ausführens der Computerprogrammanwendung entweder auf der fahrzeuginternen oder auf der fahrzeugexternen Hardwarekomponente. Die Auswahl der Hardwarekomponente kann dabei beispielsweise basierend auf den jeweils zur Verfügung stehenden Hardwareressourcen, wie z. B. Rechen- und/oder Speicherkapazität, erfolgen.

Weitere vorteilhafte Ausgestaltungen und Ausführungsbeispiele sind Gegenstand der abhängigen Patentansprüche sowie der nachfolgenden detaillierten Beschreibung einiger Ausführungsbeispiele anhand der beiliegenden Figuren.

Ausführungsbeispiele der vorliegenden Erfindung stellen eine Architektur zur Herstellung eines verteilten Infotainmentsystems mit der fahrzeuginternen Instanz ICI (In-Car Infotainment) und den fahrzeugexternen Instanzen SM (Smartphone bzw. mobiles Device) und Internet (bzw. Cloud) dar. Dabei können alle drei beteiligten Instanzen als Server ausgeführt werden. Auf allen drei Instanzen können Web-Browser laufen. Einzelne Programme (Applikationen, Widgets) können aufgrund eines Frameworks, wie z.B. HTML5, auf allen drei Instanzen ausgeführt werden. Die Schnittstelle zwischen den Instanzen ist durch ein weiteres Framework, wie z. B. Java-Skript, eindeutig definierbar und garantiert ebenfalls eine plattformunabhängige Ausführbarkeit.

Für den Austausch von Informationen können verschiedene Protokoll-Technologien genutzt werden, wie z.B. WebSocket. Es ist ebenso möglich, Dateien, beispielsweise Musikdateien, auf diese Weise auszutauschen.

Dadurch stellen Ausführungsbeispiele ein in mehreren Hinsichten konfigurierbares Infotainmentsystem bereit. In derzeitigen ICIs stellt die teure Rechenkapazität oft ein Hindernis dar. Speicherplatz hingegen ist für den Kunden relativ leicht durch Handelsware (SD-Karten, USB-Sticks) aufzustocken. Das erfindungsgemäße ICI bzw. die fahrzeuginterne Hardwarekomponente kann bezüglich seiner Hardware unterschiedlich dimensioniert werden. Ein preislich niedrig angesiedeltes ICI ist z.B. gering ausgestattet und bietet kaum Speichermöglichkeit und/oder Rechenkapazität. Aufgrund seiner begrenzten Hardwareressourcen können nur wenige Applikationen sicher auf einem einfachen ICI zur Verfügung gestellt werden (beispielsweise FM Radio). Weitere Applikationen, wie z.B. ein Medienplayer oder eine Navigation, können dann auf einem Smartphone ausgeführt werden. Ein demgegenüber hochwertigeres fahrzeuginternes ICI bringt Voraussetzungen mit, deutlich mehr Applikationen selbst und damit sicher auszuführen. Wenn ein Benutzer sein Smartphone nicht verfügbar hat, können diese Anwendungen auf dem fahrzeuginternen ICI ausgeführt werden.

Ausführungsbeispiele ermöglichen eine schnelle Entwicklung neuer Applikationssoftware für das Infotainmentsystem. Durch definierte Schnittstellen und Frameworks kann mit Standardtools entwickelt werden. Es ist auch möglich, unterschiedliche Klassen von Applikationen zu definieren, wie z. B. "sicherheitsrelevant", "Zugriff auf Fahrzeugdaten erlaubt", "nur für den Fahrzeughersteller" oder "frei konfigurierbar" (für Open Source).

Beispielsweise über ein Fahrzeughersteller-Onlineportal kann das Fahrzeug bzw. das verteilte Infotainmentsystem konfiguriert werden. Beispiele hierfür wären eine Musiksammlung oder eine Einstellung der Fahrzeuginsassensitze über das Onlineportal.

Ausführungsbeispiele der vorliegenden Erfindung bieten somit die Möglichkeit, sowohl Daten als auch Anwendungen frei zwischen den verschiedenen fahrzeuginternen und fahrzeugexternen Systemkomponenten auszutauschen. Eine Musiksammlung kann ein Nutzer auf der fahrzeuginternen Hardware, aber auch in der Cloud und/oder auf seinem Smartphone abgespeichert haben. Ausführungsbeispiele der vorliegenden Erfindung bieten hier die Möglichkeit, eine Playliste aus allen drei Instanzen herzustellen: Fahrzeuginterne Hardware (ICI), Smartphone
und Internet-Cloud. Reißt die Internetverbindung ab, so stehen die Dateien aus der Cloud nicht mehr zur Verfügung.

Durch Ausführungsbeispiele können die langen Entwicklungszeiten im Automobilbereich, die hohe Flexibilität bei der Konfigurierbarkeit und die Ausnutzung von Handelsware voneinander entkoppelt werden.

Einige exemplarische Ausführungsbeispiele der vorliegenden Erfindung werden nun nachfolgend bezugnehmend auf die beiliegenden Figuren näher erläutert. Es zeigen:
- Fig. 1: ein schematisches Blockdiagramm einer Vorrichtung zur Bereitstellung multimedialer Daten in einem Kraftfahrzeug gemäß einem Ausführungsbeispiel der vorliegenden Erfindung;
- Fig. 2: eine Prinzipdarstellung eines verteilten Infotainmentsystems gemäß einem Ausführungsbeispiel der vorliegenden Erfindung;
- Fig. 3: eine Systemarchitektur einer Laufzeitumgebung einer fahrzeuginternen InfotainmentHardwarekomponente mit Anbindung an externe Datenquellen, gemäß einem Ausführungsbeispiel der vorliegenden Erfindung; und
- Fig. 4: ein schematisches Ablaufdiagramm eines Verfahrens gemäß einem Ausführungsbeispiel der vorliegenden Erfindung.

In der nachfolgenden Beschreibung einiger exemplarischer Ausführungsbeispiele können gleiche Bezugszeichen in verschiedenen Figuren funktional gleiche oder ähnliche Funktionsblöcke bzw. Bauteile einer Vorrichtung bedeuten.

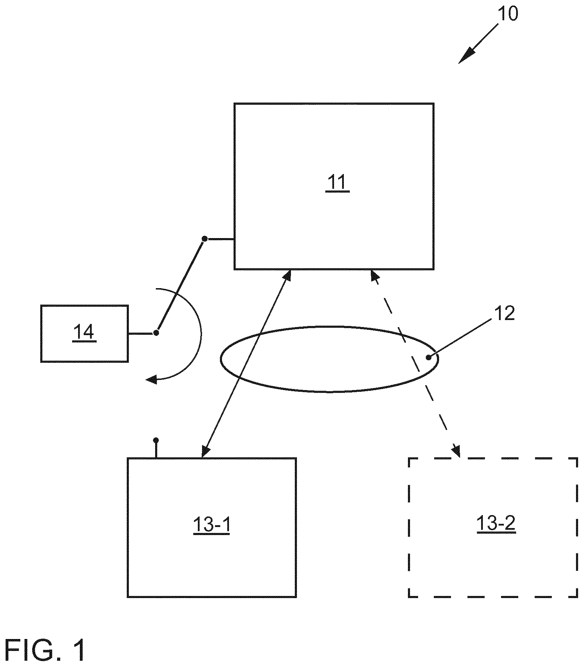

Die Fig. 1 zeigt ein schematisches Blockdiagramm einer Vorrichtung 10 zur Bereitstellung multimedialer Daten und/oder Anwendungen in einem Kraftfahrzeug.

Die Vorrichtung 10 weist wenigstens eine fahrzeuginterne Hardware- bzw. Systemkomponente 11 zum Bereitstellen einer ersten Laufzeitumgebung zur Unterstützung wenigstens einer Computerprogrammanwendung auf der fahrzeuginternen Hardwarekomponente auf. Ferner umfasst die Vorrichtung 10 eine Schnittstelle 12 zu wenigstens einer fahrzeugexternen Hardware- bzw. Systemkomponente 13, welche eine zweite Laufzeitumgebung zur Unterstützung der Computerprogrammanwendung auf der wenigstens einen fahrzeugexternen Hardwarekomponente 13 bereitstellt. Beispielhaft sind in der Fig. 1 über jeweilige Schnittstellen 12 zwei fahrzeugexterne Hardwarekomponenten 13-1 und 13-2 mit der fahrzeuginternen Hardwarekomponente 11 gekoppelt. Die fahrzeuginterne Hardwarekomponente 11 sowie die beiden fahrzeugexternen Hardwarekomponenten 13-1 und 13-2 bilden zusammen ein verteiltes Infotainmentsystem, ähnlich zu einem sogenannten Cloud-Computing Netzwerk. Es ist ferner eine Auswahleinrichtung 14 vorgesehen, die ausgebildet ist, um zum Ausführen der Computerprogrammanwendung entweder die fahrzeuginterne Hardwarekomponente 11 oder eine der fahrzeugexternen Hardwarekomponenten 13-1, 13-2 auszuwählen. Die Rechen- und/oder Speicherlast für die Computerprogrammanwendung kann also entweder fahrzeugintern oder fahrzeugextern anfallen. Ein Ergebnis der Computerprogrammanwendung kann unabhängig davon fahrzeugintern genutzt werden.

Die verschiedenen Hardwarekomponenten 11, 13-1, 13-2 können jeweils einen Prozessor und/oder einen Datenspeicher, wie z. B. einen Flash-Speicher, aufweisen. Ferner können die Hardwarekomponenten 11, 13-1 und 13-2 auch Anzeigeeinrichtungen bzw. Displays umfassen, um multimediale Inhalte audiovisuell wiedergeben zu können. Die fahrzeuginterne Hardwarekomponente 11 des verteilten Infotainmentsystems kann in dem Kraftfahrzeug fest installiert sein und wird daher im Nachfolgenden auch als In-Car-Infotainment-Komponente 11 (ICI) bezeichnet. Die fahrzeugexterne Hardwarekomponente 13-1 kann beispielsweise ein portables Gerät, wie z. B. ein Mobiltelefon mit Computerfunktionalität (Smartphone) sein. Die weitere fahrzeugexterne Hardware-Komponente 13-2 kann eine von dem Kfz entfernt liegende internetfähige Hardwarekomponente, wie z. B. ein Webserver eines Rechnernetzwerkes, sein. Dementsprechend kann die fahrzeugexterne Hardwarekomponente 13-2 beispielsweise Zugang auf einen sogenannten Cloud-Service, insbesondere einen fahrzeugherstellerspezifischen Cloud-Service bieten.

Sämtliche Hardware- bzw. Systemkomponenten 11, 13-1, 13-2 können als Plattform für die Computerprogrammanwendung, die im Sprachgebrauch auch als App oder Widget bezeichnet werden kann, eingesetzt werden. Mit anderen Worten kann ein und dieselbe Computerprogrammanwendung auf jeder der Hardwarekomponenten 11, 13-1, 13-2 des verteilten Infotainmentsystems laufen - ähnlich wie bei einem verteilten Rechnerverbund. Dazu stellen die Hardwarekomponenten 11, 13-1, 13-2, jeweils betriebssystemspezifische Laufzeitumgebungen zur Unterstützung der Computerprogrammanwendung bereit. Beispielsweise vermittelt eine erste

Laufzeitumgebung zwischen der Computerprogrammanwendung und einem ersten Betriebssystem der fahrzeuginternen Hardwarekomponente 11, eine zweite Laufzeitumgebung vermittelt zwischen der Computerprogrammanwendung und einem zweiten Betriebssystem der fahrzeugexternen Hardwarekomponente 13-1 und eine dritte Laufzeitumgebung vermittelt zwischen der Computerprogrammanwendung und einem dritten Betriebssystem der fahrzeugexternen Hardwarekomponente 13-2. Dabei kann unter einer Laufzeitumgebung (engl.: Runtime Environment) ein Computerprogramm verstanden werden, das gemeinsam mit der Computerprogrammanwendung, die nicht unmittelbar mit dem Betriebssystem kommunizieren kann, ausgeführt wird und es auf der jeweiligen Hardwarekomponente 11, 13-1, 13-2 lauffähig, also ausführbar macht, indem es zwischen Anwendungsprogramm bzw. Computerprogrammanwendung und Betriebssystem vermittelt. Prominente Beispiele hierfür sind z.B. Java-Laufzeitumgebungen, um sogenannte Java-Applets auszuführen.

Ausführungsbeispiele der vorliegenden Erfindung erlauben es also, die Computerprogrammanwendung (App) entweder auf der fahrzeuginternen Hardware 11 oder der fahrzeugexternen-Hardware 13 auszuführen. Dazu kann die Computerprogrammanwendung beispielsweise sowohl auf der fahrzeuginternen Hardware 11, als auch auf der fahrzeugexternen Hardware 13 installiert sein. Die Auswahleinrichtung 14 kann dann lediglich bestimmen, auf welcher Hardwarekomponente die Anwendung gestartet und damit ausgeführt wird. Während eine erste Computerprogrammanwendung (z.B. FM Radio) beispielsweise auf der fahrzeuginternen Hardware 11 ausgeführt werden kann, kann eine zweite Computerprogrammanwendung (z.B. Navigation) des Infotainmentsystems auf einer der fahrzeugexternen Hardwarekomponenten 13 ausgeführt werden. Über die Schnittstelle 12 können dann die von der zweiten Computerprogrammanwendung auf der externen Hardware 13 erzeugten Daten an die fahrzeuginterne Hardware 11 übertragen werden, sodass die fahrzeuginterne Hardware 11 die empfangenen Daten (z.B. Navigationsdaten) darstellen bzw. wiedergeben kann. Während die erste Computerprogrammanwendung also beispielsweise ein Medienplayer für Audio- und/oder Videodaten sein kann, welcher auf der fahrzeuginternen Infotainment-Hardwarekomponente 11 ausgeführt wird, kann die zweite Computerprogrammanwendung beispielsweise eine Navigationsanwendung sein, welche von einem Smartphone ausgeführt wird, weil Rechen- und/oder Speicherkapazitäten der fahrzeuginternen Hardware dazu nicht ausreichen.

Die Auswahleinrichtung 14 kann also gemäß manchen Ausführungsbeispielen ausgebildet sein, um zur Ausführung der Computerprogrammanwendung die fahrzeuginterne Hardwarekomponente 11 auszuwählen, wenn Hardware-Ressourcen der fahrzeuginternen Hardwarekomponente für die Ausführung der Computerprogrammanwendung ausreichend sind, ansonsten kann eine der fahrzeugexternen Hardwarekomponenten 13-1 oder 13-2 ausgewählt werden. Generell kann die Auswahl der Hardware von der Auswahleinrichtung 14 auch lastspezifisch durchgeführt werden, sodass sämtliche Hardwarekomponenten 11, 13-1, 13-2 ungefähr gleichmäßig rechenmäßig ausgelastet sind (Load-Balancing). Bei einfachen Ausführungsbeispielen kann die Auswahl aber auch lediglich manuell im Fahrzeug oder vorab durch einen Online-Dienst bzw. Webserver festgelegt werden. Beim Start des verteilten Infotainmentsystems kann die fahrzeuginterne Hardwarekomponente 11 dann beispielsweise vermittels einer Konfigurationsdatei, die von dem Web-Server 13-2 über die Schnittstelle 12 zu der fahrzeuginternen Hardware 11 übertragen wird, über die Auswahl informiert werden. Bei anderen Ausführungsbeispielen kann die Auswahl aber auch beispielsweise akkulaufzeitabhängig durchgeführt werden. Bei derartigen Ausführungsbeispielen kann beispielsweise bei einem schwächer werdenden Smartphone-Akku eine auf dem Smartphone laufende Infotainmentanwendung auf die fahrzeuginterne Hardware 11 portiert werden. Dieser Portierungs- oder Migrationsvorgang kann bei einfacheren Ausführungsformen durch Anhalten und Neustarten der Applikation, bei anderen Ausführungsformen kann die Portierung auch während der Laufzeit der Applikation durch Prozessmigrationsstrategien durchgeführt werden.

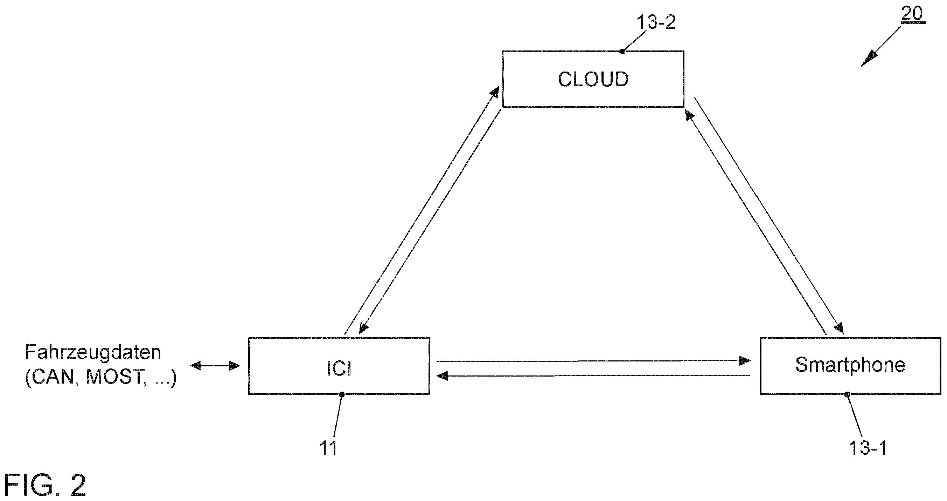

Durch die vorgeschlagene verteilte Systemarchitektur kann ein sehr flexibles und skalierbares Infotainmentsystem bereitgestellt werden, bei dem komplexe Infotainmentanwendungen auch dann ausgeführt werden können, wenn die fahrzeuginterne Infotainmenthardware 11 nur schwach ausgestattet ist. In diesem Fall können nämlich Anwendungen statt auf der fahrzeuginternen Hardware 11 auf der fahrzeugexternen Hardware 13 (z. B. Smartphone, Tablet-PC, Webserver, etc.) ausgeführt werden und deren Resultate vermittels der Schnittstelle 12 an ein Ausgabegerät der fahrzeuginternen Hardware 11 weitergegeben werden. Diese flexible Skalierbarkeit durch die Möglichkeit des Verschiebens von Anwendungen von einer Systemkomponente auf eine andere, wird anhand des Prinzipschaubildes der Fig. 2 verdeutlicht.

Die Fig. 2 zeigt das verteilte Infotainmentsystem 20, welches auch als Medien-Aggregator-Gesamtsystem bezeichnet werden kann. Das Infotainmentsystem 20 umfasst beispielhaft die drei bereits beschriebenen Komponenten: Die fahrzeuginterne Laufzeitumgebung bzw. Hardware 11 des Infotainmentsystems (ICI), eine fahrzeugexterne Smartphone-Komponente 13-1 und eine fahrzeugexterne Serverkomponente (Cloud-Service) 13-2. Aufgaben, wie z. B. die Ausführung von Infotainmentanwendungsprogrammen, die Speicherung bzw. Bereitstellung von Daten, etc., können, wie es durch die Doppelpfeile angedeutet ist, frei zwischen den einzelnen

Systemkomponenten 11, 13-1 und 13-2 verteilt werden. Die Verteilung derartiger Aufgaben kann dabei z. B. abhängig von der jeweils zur Verfügung stehenden Rechen- und/oder Speicherleistung der jeweiligen Hardwarekomponente gemacht werden. Das Infotainmentsystem 20 umfasst also nicht mehr nur, wie bisher, eine fahrzeuginterne Infotainment-Komponente 11, sondern zusätzliche fahrzeugexterne Komponenten (z.B. Smartphone, Cloud), deren Hardware-Ressourcen in das Infotainmentsystem 20 derart mit einbezogen werden, dass es für einen Benutzer unerheblich ist, auf welcher Hardwarekomponente nun eigentlich eine bestimmte Infotainmentanwendung ausgeführt wird. In anderen Worten ausgedrückt, bemerkt der Nutzer bei Ausführungsbeispielen der vorliegenden Erfindung unter Umständen gar nicht, auf welcher der Hardwarekomponenten 11, 13-1, 13-2 nun eigentlich die Anwendung ausgeführt wird. Die Ergebnisse können unabhängig von der Plattform über die fahrzeuginterne Hardware 11 ausgegeben werden.

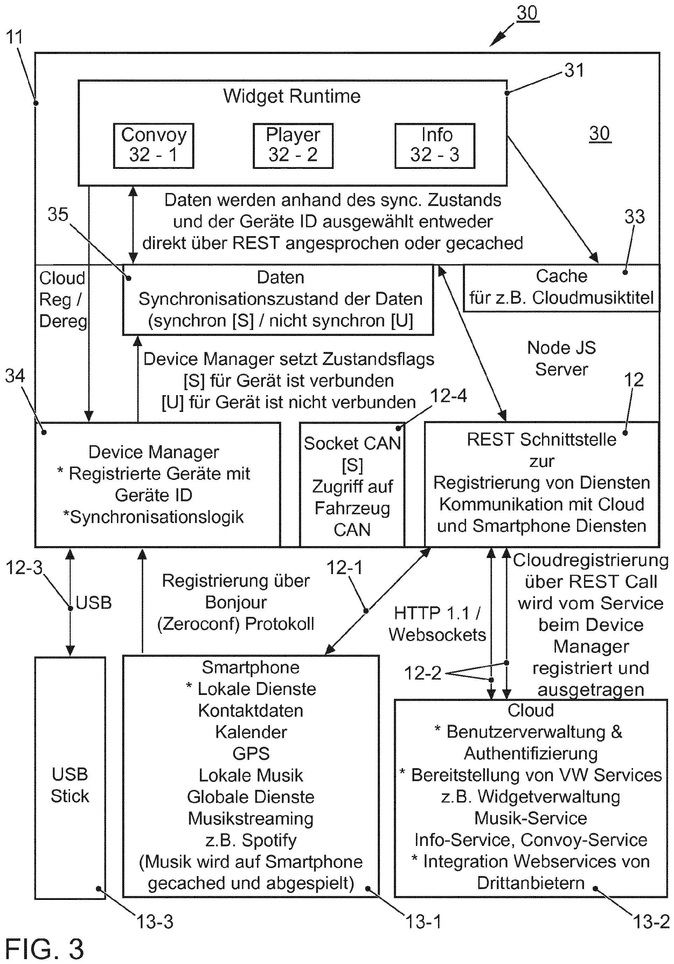

Die Laufzeitumgebung auf der fahrzeuginternen Hardwarekomponente 11 bietet verschiedene Funktionen, welche in der Fig. 3 schematisch dargestellt sind. Ziele bei der dargestellten Konzeption der Systemarchitektur waren u. a. der Einsatz aktueller Standards und das Vermeiden proprietärer Lösungen, um Erweiterbarkeit, Wartbarkeit und Plattformunabhängigkeit zu gewährleisten. Ferner soll die Nutzung des Systems so komfortabel wie möglich sein. Insbesondere, um eine leichte Erweiterbarkeit, Wartbarkeit und Plattformunabhängigkeit zu ermöglichen, wurde bei der Konzeption und Entwicklung des Infotainmentsystems auf standardisierte Internet-Protokolle und Technologien gesetzt.

Die Fig. 3 zeigt ein verteiltes Infotainmentsystem 30 mit der fahrzeuginternen Komponente 11 und drei exemplarischen fahrzeugexternen Komponenten 13-1, 13-2 und 13-3. Während die fahrzeuginterne Systemkomponente 11 im Fahrzeug selbst verbaut ist, kann es sich bei der fahrzeugexternen Komponente 13-1 um ein Smartphone, bei der fahrzeugexternen Komponente 13-2 um eine Internet-Cloud und bei der fahrzeugexternen Komponente 13-3 beispielsweise um einen USB-Stick (Universal Serial Bus) handeln. Über das Smartphone 13-1 können beispielsweise lokale Dienste, wie Kontaktdaten, Kalender, GPS-Daten/Dienste oder lokale Musik, bereitgestellt werden. Ebenso können globale Dienste, wie Musikstreaming, ausgeführt werden. Über die Cloud-Komponente 13-2 kann beispielsweise eine Benutzerverwaltung und Authentifizierung stattfinden. Ferner können darüber fahrzeugherstellerspezifische Services bereitgestellt werden. Außerdem können die Anwendungsprogramme, welche in dem verteilten Infotainmentsystem zur Verfügung stehen sollten, verwaltet werden. Über die Cloud-Komponente 13-2 kann ein beispielsweise Musik-Service, ein Info-Service, ein Convoy-Service oder eine Integration
von weiteren Webservices von Drittanbietern bereitgestellt werden. Der USB-Stick 13-3 kann beispielsweise als externes Speichermedium zur Speicherung von Musik-, Bild- und/oder Videodaten dienen, auf die über die entsprechende Schnittstelle 12-3 von der fahrzeuginternen Systemkomponente 11 zugegriffen werden kann. Der Convoy-Service ermöglicht das Eröffnen, die Teilnahme und das Verlassen eines Fahrzeug-Convoys. Die Convoy-App zeigt den "Durchgriff" auf verschiedene Anwendungen durch das Gesamtsystem. Über ein entsprechendes HMI (Human Machine Interface, Mensch-Maschine-Schnittstelle) kann ein Fahrzeug A eine Convoy-Fahrt durch Festlegung eines Ziels über eine Navigationsanwendung, und anschließende Einladung an mindestens einen weiteren Teilnehmer B aus dem Adressbuch initiieren. Ein Fahrzeug B (C, D, ...) kann über ein entsprechendes HMI informiert werden, dass es zu einer Convoy-Fahrt mit Fahrzeug A eingeladen ist. Die Teilnahme kann bestätigt oder abgelehnt werden. Das Ziel wird übernommen und die Navigationsanwendung von Fahrzeug B berechnet die Route. Die Position von A (C, D, ...) erscheint dynamisch in der Navigation von B, die Postion von B (C, D, ...) in der Navigation von A. Jeder Teilnehmer des Convoys kann Nachrichten (z.B. in Textform) an die anderen Teilnehmer senden (z.B. "gemeinsame Pause auf Parkplatz XY").

Auf der fahrzeuginternen Hardwarekomponente 11 wird eine Laufzeitumgebung für Computerprogrammanwendungen (Widget-Runtime) 31 ausgeführt. Die Laufzeitumgebung 31 dient als Vermittlungsinstanz zwischen Computerprogrammanwendungen 32 und einem Betriebssystem der Hardwarekomponente 11. Die Computerprogrammanwendungen 32, sogenannte Widgets, können z.B. mittels HTML5 (Hypertext Markup Language), Java-Script und CSS3 (Cascading Style Sheets) entwickelt werden. Gemäß Ausführungsbeispielen basiert also eine applikationsspezifische Computerprogrammanwendung auf Version 5 oder höheren Versionen der textbasierten Auszeichnungssprache HTML. HTML5 ist dabei eine Zusammenfassung nicht geschützter Standards zur Bereitstellung von Inhalten und Funktionen für sämtliche Gerätetypen. Es ist der künftige Standard für die Erstellung von Websites und umfasst den eigentlichen Standard sowie zusätzliche Standards und Technologien, wie CSS3, Java-Script als Script-Sprache und flankierende Standards, wie AJAX (Asynchronous JavaScript And XML) und JSON (JavaScript Object Notation). Hinzu kommen weitere freie Standards, wie XML (Extensible Markup Language, erweiterbare Auszeichnungssprache) und XHTML (Extensible HyperText Markup Language). Diese Standards und Technologien ermöglichen die Entwicklung einer hohen Bandbreite funktionsstarker Bedienoberflächen.

Verschiedene Anwendungen 32, in Form sogenannter Widgets, können gemäß Ausführungsbeispielen also auf das fahrzeuginterne ICI 11 synchronisiert werden. Diese Widgets 32 können
dem Benutzer jeweils eine bestimmte Funktionalität des Infotainmentsystems zur Verfügung stellen. Beispielhaft sind in der Fig. 3 die Widgets "Convoy", "Player" und "Info" genannt. Die Widgets 32 können über definierte Schnittstellen 12, welche auf dem Representational State Transfer (REST) Paradigma basieren können und standardisierte Protokolle, wie z. B. HTTP, WebSocket, verwenden können, zur Kommunikation mit den externen Hardwarekomponenten 13 auf Daten aus der Cloud 13-2, dem Smartphone 13-1, angesteckten USB-Medien 13-3 oder den Fahrzeug-CAN (Controller Area Network) zugreifen. Die Schnittstellen 12 können von der Laufzeitumgebung 31 oder dem externen Gerät/Dienst 13 (Smartphone 13-1, Cloud-Service 13-2) bereitgestellt werden. Eine Schnittstelle 12 kann gemäß Ausführungsbeispielen also von der ersten Laufzeitumgebung 31 und der wenigstens einen fahrzeugexternen Hardwarekomponente 13 und/oder der zweiten Laufzeitumgebung bereitgestellt werden. Dabei können die Schnittstellen 12 auf dem REST-Programmierparadigma und wenigstens einem standardisierten Netzwerkprotokoll basieren, insbesondere HTTP und/oder Websocket. Im Grunde bezeichnet REST die Idee, dass eine URL (Uniform Resource Locator, Quellenanzeiger) genau einen Seiteninhalt als Ergebnis einer serverseitigen Aktion darstellt, wie es der Internetstandard HTTP für statische Inhalt bereits vorsieht. REST ist gekennzeichnet dadurch, dass eine Kommunikation auf Abruf erfolgt. Vorteilhaft kann die Verwendung des WebSocket-Protokoll zur Aufrechterhaltung von Kommunikationsverbindungen sein auch wenn kein Abruf da ist. Hierdurch kann die Zeit zum Kommunikationsaufbau minimiert werden. Ein Client ist aktiv und fordert von einem passiven Server eine Repräsentation einer Ressource an bzw. modifiziert eine Ressource. Ressourcen, die Objekte einer Anwendung, besitzen eine ihnen zugeordnete URI (Uniform Resource Identifier), mit der sie adressiert werden können. Eine Repräsentation einer Ressource kann als Dokument vom Client angefordert werden. Repräsentationen von Ressourcen können auf weitere Ressourcen verweisen, die ihrerseits wieder Repräsentationen liefern, die wiederum auf Ressourcen verweisen können. Ein Server verfolgt keinen Clientstatus. Jede Anfrage an den Server muss alle Informationen beinhalten, die zum Interpretieren der Anfrage notwendig sind. Caches (Pufferspeicher) werden unterstützt. Ein Server kann seine Antwort als cachefähig oder nicht cachefähig kennzeichnen.

Je nach Anwendungsfall können Daten mit dem fahrzeuginternen ICI 11 synchronisiert und dort persistent gespeichert werden, um diese auch offline, d. h. ohne Verbindung zu Smartphone 13-1 oder zur Cloud 13-2, weiterhin nutzen zu können. Die Synchronisation der Daten ist abhängig vom Anwendungsfall. Daher ist es die Aufgabe des jeweiligen Widgets 32, welches eine Business-Logik einer Kundenfunktion implementieren kann, zu entscheiden, ob die Daten im Offline-Modus genutzt werden sollen oder nicht. Die Infotainment-Vorrichtung 10 kann also gemäß manchen Ausführungsbeispielen einen kraftfahrzeuginternen Datenspeicher 33 aufweisen, um, für den Fall einer fehlenden Konnektivität zwischen der fahrzeuginternen und der fahrzeugexternen Hardwarekomponenten 11, 13, multimediale Daten und/oder Anwendungsdaten von der fahrzeugexternen Hardwarekomponente 13 in den fahrzeuginternen Datenspeicher 33 zu kopieren. Werden Daten von externen Quellen 13 genutzt und sollen diese mit dem ICI 11 synchronisiert werden, so kann es vorteilhaft sein, den Status der Synchronisation zu erfassen und diesen in einer lokalen ICI-Datenbank 35 zu vermerken. Dies ist beispielsweise eine Aufgabe für eine Geräte-Management-Komponente 34.

Mit dem ICI 11 über die Schnittstellen 12 gekoppelte externe Geräte 13, können von der Geräte-Management-Komponente 34 der fahrzeuginternen Hardware 11 verwaltet werden. Die Infotainment-Vorrichtung 10 kann also ausgebildet sein, um mit der fahrzeuginternen Hardwarekomponente 11 über die Schnittstelle 12 gekoppelte fahrzeugexterne Hardwarekomponenten 13 zu erkennen und/oder zu verwalten. Dabei kann sich beispielsweise ein Smartphone 13-1 automatisch nach einem Start der Anwendungssoftware auf dem Smartphone bei dem Device-Manager 34 anmelden. Dies kann beispielsweise über das bekannte Bonjour-Protokoll erfolgen. Bonjour ist dabei eine Technik, welche die automatische Erkennung von Netzwerkdiensten in IP-Netzen (Internet Protocol) bereitstellt. Es ist eine Implementierung des sogenannten Zeroconf oder Zero Configuration Networking Systems zur Konfiguration von Rechnernetzen ohne Menschen. Der Geräte-Manager 34 kann zusätzlich angesteckte USB-Geräte 13-3 registrieren und, ob eine Internetverbindung und Anbindung zum Cloud-Service 13-2 besteht. Dies kann beispielsweise durch eine REST GET Anfrage beim Cloud-Service 13-2 erfolgen. Eine Deregistrierung der externen Hardware-Komponenten 13 kann dementsprechend ebenfalls wieder vermittels Bonjour oder über einen Dienst erfolgen, welcher eine nicht erfolgreiche REST GET Anfrage erhält. Der Geräte-Manager 34 kann der Datenbank 35 den aktuellen Registrierungs- bzw. Synchronisationszustand eines externen Geräts 13 melden.

Es kann unterschieden werden zwischen synchronisierten Daten und nicht synchronisierten Daten. Bei synchronisierten Daten steht das Gerät 13, welches die Daten hält, auch zur Laufzeit der Anwendung 32 zur Verfügung. Beispielsweise kann ein Musik-Player von einem Streaming-Dienst nur Musiktitel abspielen, wenn dieser bzw. das externe Gerät, welches die gestreamte Musik abspielt, erreichbar ist. Nicht synchronisierte Daten sind Daten, die einmal in den internen Speicher 35 eingelesen wurden, jedoch das Gerät 13, von dem sie stammen, gerade zur Laufzeit der Anwendung 32 nicht zur Verfügung steht. Dieser Zustand ist beispielsweise für Kalenderdaten interessant, da diese, auch wenn sie nicht aktuell sind, verwendet werden können. Durch diese Unterscheidung ist es den jeweiligen Diensten möglich, zu entscheiden, ob sie die Daten noch verwenden wollen oder nicht.

Die Anwendungen bzw. Widgets 32 können anhand des Synchronisationszustandes der Daten und einer Geräte-ID die benötigten Daten aus der internen Datenbank 35 auswählen. Über die REST-Schnittstelle 12 können die Widgets 32 beispielsweise den Cloud-Service 13/2 anfragen und bei Erreichbarkeit/Nichterreichbarkeit diesen beim Devise-Manager 34 registrieren oder deregistrieren. Über die REST-Schnittstelle und eine nicht erfolgreiche REST GET Anfrage erkennen die Anwendungen 32, wenn beispielsweise der Cloud-Service 13-2 nicht mehr verfügbar ist. Die Widgets 32 können somit selbständig Synchronisationsflags für beispielsweise den Cloud-Service 13-2 verwalten. Die Widgets können dementsprechend auch bei Nichterreichen eines externen Gerätes 13 dem Geräte-Manager 34 den aktuellen Zustand des externen Gerätes 13 mitteilen.

Die fahrzeugexterne Cloud-Komponente 13-2, d. h. der Cloud-Service, kann gemäß manchen Ausführungsbeispielen als zentrale Instanz des verteilten Infotainmentsystems 30 dienen und Funktionen zur Benutzer-Authentifizierung, der Verwaltung von Benutzerinformationen sowie zur Konfiguration der verwendeten Applikationen bzw. Anwendungen 32 und ICI-Einstellungen dienen. Der Online-Service 13-2 kann eine Benutzerschnittstelle zur Verfügung stellen, über die ein Nutzer benötigte Einstellungen für das Infotainmentsystem tätigen und die verwendeten Widgets 32 und Dienste verwalten kann. Dadurch kann es dem Nutzer beispielsweise ermöglicht werden, das verteilte Infotaintmentsystem zu personalisieren. Im Rahmen derartiger Ausführungsbeispiele kann die Vorrichtung 10 ausgebildet sein, um über die Schnittstelle 12 eine Konfigurationseinstellung von der fahrzeugexternen Komponente 13-2 zu empfangen, wobei die Konfigurationseinstellung Informationen über die wenigstens eine auszuführende Computerprogrammanwendung 32 und/oder wiederzugebende multimediale Daten umfassen kann.

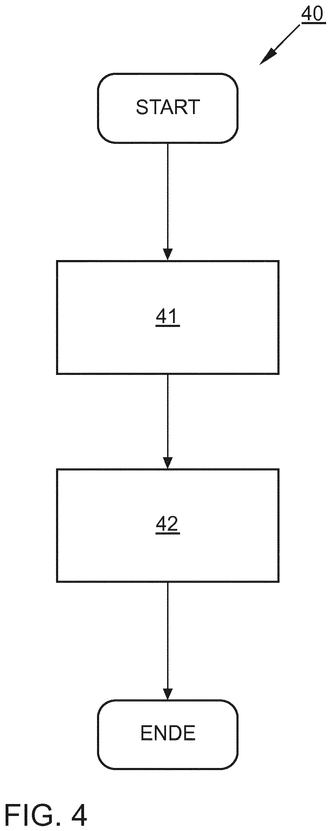

Anhand der Fig. 4 wird nun noch ein Verfahren 40 zur Bereitstellung multimedialer Daten in einem Kraftfahrzeug gemäß einem Ausführungsbeispiel der vorliegenden Erfindung beschrieben. Das Kraftfahrzeug weist eine fahrzeuginterne Hardwarekomponente 11 auf, welche eine erste Laufzeitumgebung 31 zur Unterstützung wenigstens einer Computerprogrammanwendung 32 auf der fahrzeuginternen Hardwarekomponente (ICI) 11 bereitstellt.

Das Verfahren 40 umfasst einen ersten Schritt 41 des Bereitstellens einer Schnittstelle 12 zwischen der wenigstens einen fahrzeuginternen Hardware- bzw. Systemkomponente 11 und wenigstens einer fahrzeugexternen Hardware- bzw. Systemkomponente 13-1, 13-2, 13-3, welche eine zweite Laufzeitumgebung zur Unterstützung der wenigstens einen Computerprogrammanwendung 32 auf der fahrzeugexternen Hardwarekomponente 13 bereitstellt. Ferner umfasst das Verfahren 40 einen zweiten Schritt 42 des Ausführens der wenigstens einen Computerprogrammanwendung 32 entweder auf der fahrzeuginternen Hardwarekomponente 11 oder auf der fahrzeugexternen Hardwarekomponente 13.

Ausführungsbeispiele der vorliegenden Erfindung stellen also ein verteiltes Infotainmentsystem bereit, bei dem auf der Basis neuer Vernetzungstechnologien, wie z. B. LTE (Long Term Evolution), Bluetooth, WLAN (Wireless Local Area Network), im Kraftfahrzeug (ICI) bzw. außerhalb des Kraftfahrzeuges (Smartphone, Internet-Cloud, bzw. Onlinedienste) wesentliche Infotainment-komponenten miteinander verbunden bzw. gekoppelt werden, um multimediale Vielfalt, Komfort und Sicherheit im Kraftfahrzeug verbessern zu können.

Beispielsweise sind Audiodaten heutzutage auf verschiedenen Distributionswegen (beispielsweise CD, Download, etc.) verfügbar und somit entstehen schnell große Bibliotheken, die aber auf CDs, Smartphones, heimischen PCs oder USB-Sticks verteilt sind. Mit Ausführungsbeispielen der vorliegenden Erfindung, können derartige Bibliotheken im Kraftfahrzeug zusammengeführt werden. Allerdings ist eine Erstellung von Playlisten bequemer (und sicherer) am heimischen PC zu erledigen als im Fahrzeug. Gleichwohl können so erstellte Playlisten im Fahrzeug genutzt werden und die Musikbibliothek auch dort stets aktuell sein.

Für den Bereich "Komfort" ist es denkbar, sogenannte PIM (Personal Information Management) Daten (wie z. B. Kalendereinträge, Kontakte, etc.) im Kraftfahrzeug aktuell zur Verfügung zu stellen.

Sicherheitstechnisch lassen sich z. B. aktuelle Wetterdaten, Staumeldungen, Informationen zu Parksituationen, etc., gebündelt darstellen.

Mit Ausführungsbeispielen entsteht somit ein stationäres (heimischer PC), portables (Smartphone) und mobiles (ICI) Gesamtinfotainmentsystem, in welchem Daten von allen verteilten Komponenten zusammengeführt bzw. aggregiert werden können. Das System ist in der Lage, Anwendungen auf verschiedene Hardwarekomponenten laufen zu lassen und ist zudem leicht erweiterbar. Ausführungsbeispiele stellen also ein Infotainmentsystem umfassend eine internetbasierte Komponente, eine smartphone-basierte Komponente und das fahrzeuginterne ICI
sowie entsprechende Schnittstellen bereit, welches einen Zugriff auf die aggregierten Daten ermöglicht.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren oder einzelne Schritte davon durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale
aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verteiltes Infotainmentsystem zur Bereitstellung multimedialer Daten in einem Kraftfahrzeug, mit folgenden Merkmalen:
wenigstens einer fahrzeuginternen Hardwarekomponente (11) mit einem ersten Betriebssystem und mit einer ersten Laufzeitumgebung (31) zur Vermittlung zwischen wenigstens einer Computerprogrammanwendung (32) und dem ersten Betriebssystem der fahrzeuginternen Hardwarekomponente (11);
wenigstens eine fahrzeugexterne Hardwarekomponente (13) mit einem zweiten Betriebssystem und mit einer zweiten Laufzeitumgebung zur Vermittlung zwischen zwischen derselben Computerprogrammanwendung (32) und dem zweiten Betriebssystem der fahrzeugexternen Hardwarekomponente (13); und
eine Auswahleinrichtung (14), die ausgebildet ist, um zum Ausführen der Computerprogrammanwendung (32) entweder die fahrzeuginterne Hardwarekomponente (11) oder die fahrzeugexterne Hardwarekomponente (13) auszuwählen;
wobei. die Auswahleinrichtung (14) ausgebildet ist, um die fahrzeuginterne Hardwarekomponente (11) auszuwählen, wenn Hardware-Ressourcen der fahrzeuginternen Hardwarekomponente (11) für die Ausführung der Computerprogrammanwendung (32) ausreichend sind, und sonst die fahrzeugexterne Hardwarekomponente (13);
wobei die Auswahleinrichtung (14) ausgebildet ist, um die fahrzeuginterne Hardwarekomponente (11) in Abhängigkeit von der Akkulaufzeit der fahrzeugexternen Hardwarekomponente (13) auszuwählen.

2. System nach einem der vorhergehenden Ansprüche, wobei die wenigstens eine fahrzeuginterne Hardwarekomponente (11) einen Prozessor und/oder einen Datenspeicher eines Infotainment-Systems des Kraftfahrzeugs umfasst.

3. System nach einem der vorhergehenden Ansprüche, wobei die wenigstens eine Computerprogrammanwendung auf Version 5 oder höheren Versionen der textbasierten Auszeichnungssprache HTML basiert.

4. System nach einem der vorhergehenden Ansprüche, wobei die wenigstens eine fahrzeugexterne Hardwarekomponente (13) ein portables Gerät mit wenigstens einem Prozessor und einem Datenspeicher zum Ausführen der wenigstens einen Computerprogrammanwendung (32) umfasst, insbesondere einen Laptop-Computer oder ein Smartphone.

5. System nach einem der vorhergehenden Ansprüche, wobei die wenigstens eine fahrzeugexterne Hardwarekomponente (13) einen fahrzeugexternen Webserver umfasst, um von dem Kraftfahrzeug aus über die Schnittstelle (12) auf von dem Webserver bereitgestellte Daten oder Anwendungen eines Internet-Dienstes zugreifen zu können.

6. System nach einem der vorhergehenden Ansprüche, wobei die Schnittstelle (12) ausgebildet ist, um von einer auf der fahrzeugexternen Hardwarekomponente (13) ausgeführten Computerprogrammanwendung (32) erzeugte Daten an die fahrzeuginterne Hardwarekomponente (11) zu übertragen, so dass die erzeugten Daten über die fahrzeuginterne Hardwarekomponente (11) wiedergegeben werden können.

7. System nach einem der vorhergehenden Ansprüche, wobei die Vorrichtung ausgebildet ist, um über die Schnittstelle (12) eine Konfigurationseinstellung von der fahrzeugexternen Hardwarekomponente (13) zu empfangen, wobei die Konfigurationseinstellung Informationen über die wenigstens eine auszuführende Computerprogrammanwendung und/oder wiederzugebende multimediale Daten umfasst.

8. System nach einem der vorhergehenden Ansprüche, wobei die Schnittstelle (12) von der ersten Laufzeitumgebung und der wenigstens einen kraftfahrzeugexternen Hardwarekomponente (13) und/oder der zweiten Laufzeitumgebung bereitgestellt wird.

9. System nach einem der vorhergehenden Ansprüche, wobei die Schnittstelle (12) auf dem Representational State Transfer (REST) Programmierparadigma und wenigstens einem standardisierten Netzwerkprotokoll basiert, insbesondere HTTP und/oder WebSocket.

10. System nach einem der vorhergehenden Ansprüche, ferner aufweisend:
einen fahrzeuginternen Datenspeicher (33; 35), um, für den Fall einer fehlenden Konnektivität zwischen der fahrzeuginternen Hardwarekomponente (11) und der fahrzeugexternen Hardwarekomponente (13), multimediale Daten und/oder Computerprogrammanwendungen von der fahrzeugexternen Hardwarekomponente (13) in den fahrzeuginternen Datenspeicher zu kopieren.

11. Verfahren (40) zur Bereitstellung multimedialer Daten in einem Kraftfahrzeug, das eine fahrzeuginterne Hardwarekomponente (11) mit einem ersten Betriebssystem und mit einer ersten Laufzeitumgebung (31) zur Vermittlung zwischen wenigstens einer Computerprogrammanwendung (32) und dem ersten Betriebssystem der fahrzeuginternen Hardwarekomponente (11), mit folgenden Schritten:
Bereitstellen (41) einer Schnittstelle (12) zwischen der fahrzeuginternen Hardwarekomponente (11) und wenigstens einer fahrzeugexternen Hardwarekomponente (13) mit einem zweiten Betriebssystem und einer zweiten Laufzeitumgebung zur Vermittlung zwischen derselben Computerprogrammanwendung (32) und dem zweiten Betriebssystem der fahrzeugexternen Hardwarekomponente (13); und
Ausführen (42) der Computerprogrammanwendung (32) entweder auf der fahrzeuginternen Hardwarekomponente (11) oder der fahrzeugexternen Hardwarekomponente (13),
wobei die fahrzeuginterne Hardwarekomponente (11) ausgewählt wird, wenn Hardwareressourcen der fahrzeuginternen Hardwarekomponente (11) für die Ausführung der Computerprogrammanwendung (32) ausreichend sind, und sonst die fahrzeugexterne Hardwarekomponente (13) ausgewählt wird;
wobei die fahrzeuginterne Hardwarekomponente (11) in Abhängigkeit von der Akkulaufzeit der fahrzeugexternen Hardwarekomponente (13) ausgewählt wird.

12. Computerprogramm zur Durchführung wenigstens eines Schritts des Verfahrens nach Aspruch 11, wenn das Computerprogramm auf einer programmierbaren Hardwarekomponente abläuft.

## Claims

1. Distributed infotainment system for providing multimedia data in a motor vehicle, having the following features:
at least one vehicle-internal hardware component (11) having a first operating system and having a first runtime environment (31) for mediating between at least one computer program application (32) and the first operating system of the vehicle-internal hardware component (11);
at least one vehicle-external hardware component (13) having a second operating system and having a second runtime environment for mediating between the same computer program application (32) and the second operating system of the vehicle-external hardware component (13); and
a selection device (14) that is configured to select either the vehicle-internal hardware component (11) or the vehicle-external hardware component (13) to execute the computer program application (32);
wherein
the selection device (14) is configured to select the vehicle-internal hardware component (11) if hardware resources of the vehicle-internal hardware component (11) are sufficient for executing the computer program application (32), and otherwise the vehicle-external hardware component (13);
the selection device (14) being configured to select the vehicle-internal hardware component (11) on the basis of the rechargeable battery operating time of the vehicle-external hardware component (13).

2. System according to one of the preceding claims, wherein the at least one vehicle-internal hardware component (11) comprises a processor and/or a data memory of an infotainment system of the motor vehicle.

3. System according to either of the preceding claims, wherein the at least one computer program application is based on version 5 or higher versions of the text-based markup language HTML.

4. System according to one of the preceding claims, wherein the at least one vehicle-external hardware component (13) comprises a portable device having at least one processor and a data memory for executing the at least one computer program application (32), particularly a laptop computer or a smartphone.

5. System according to one of the preceding claims, wherein the at least one vehicle-external hardware component (13) comprises a vehicle-external web server in order to be able to access from the motor vehicle, via the interface (12), data or applications of an Internet service that are provided by the web server.

6. System according to one of the preceding claims, wherein the interface (12) is configured to transmit data generated by a computer program application (32) executed on the vehicle-external hardware component (13) to the vehicle-internal hardware component (11), so that the generated data can be reproduced via the vehicle-internal hardware component (11).

7. System according to one of the preceding claims, wherein the apparatus is configured to receive a configuration setting from the vehicle-external hardware component (13) via the interface (12), the configuration setting comprising information about the at least one computer program application to be executed and/or multimedia data to be reproduced.

8. System according to one of the preceding claims, wherein the interface (12) is provided by the first runtime environment and the at least one motor-vehicle-external hardware component (13) and/or the second runtime environment.

9. System according to one of the preceding claims, wherein the interface (12) is based on the Representational State Transfer (REST) programming paradigm and at least one standardized network protocol, particularly HTTP and/or WebSocket.

10. System according to one of the preceding claims, further having:
a vehicle-internal data memory (33; 35) in order to copy multimedia data and/or computer program applications from the vehicle-external hardware component (13) to the vehicle-internal data memory in the event of a lack of connectivity between the vehicle-internal hardware component (11) and the vehicle-external hardware component (13).

11. Method (40) for providing multimedia data in a motor vehicle that a vehicle-internal hardware component (11) having a first operating system and having a first runtime environment (31) for mediating between at least one computer program application (32) and the first operating system of the vehicle-internal hardware component (11), having the following steps:
providing (41) an interface (12) between the vehicle-internal hardware component (11) and at least one vehicle-external hardware component (13) having a second operating system and a second runtime environment for mediating between the same computer program application (32) and the second operating system of the vehicle-external hardware component (13); and
executing (42) the computer program application (32) either on the vehicle-internal hardware component (11) or on the vehicle-external hardware component (13),
wherein the vehicle-internal hardware component (11) is selected if hardware resources of the vehicle-internal hardware component (11) are sufficient for executing the computer program application (32), and otherwise the vehicle-external hardware component (13) is selected;
the vehicle-internal hardware component (11) being selected on the basis of the rechargeable battery operating time of the vehicle-external hardware component (13).

12. Computer program for performing at least one step of the method (40) according to Claim 11 when the computer program runs on a programmable hardware component.

## Revendications

1. Système d'infodivertissement distribué destiné à mettre à disposition des données multimédia dans un véhicule automobile, ayant les caractéristiques suivantes :
au moins un composant matériel interne au véhicule (11) comprenant un premier système d'exploitation et comprenant un premier environnement d'exécution (31) destiné à la commutation entre au moins une application de programme informatique (32) et le premier système d'exploitation du composant matériel interne au véhicule (11) ;
au moins un composant matériel externe au véhicule (13) comprenant un deuxième système d'exploitation et comprenant un deuxième environnement d'exécution destiné à la commutation entre la même application de programme informatique (32) et le deuxième système d'exploitation du composant matériel externe au véhicule (13) ; et
un dispositif de sélection (14) qui est configuré pour sélectionner soit le composant matériel interne au véhicule (11), soit le composant matériel externe au véhicule (13) en vue de l'exécution de l'application de programme informatique (32) ;
le dispositif de sélection (14) étant configuré pour sélectionner le composant matériel interne au véhicule (11) lorsque les ressources matérielles du composant matériel interne au véhicule (11) sont suffisantes pour l'exécution de l'application de programme informatique (32) et sinon le composant matériel externe au véhicule (13) ;
le dispositif de sélection (14) étant configuré pour sélectionner le composant matériel interne au véhicule (11) en fonction de l'autonomie de la batterie du composant matériel externe au véhicule (13).

2. Système selon l'une des revendications précédentes, l'au moins un composant matériel interne au véhicule (11) comprenant un processeur et/ou une mémoire de données d'un système d'infodivertissement du véhicule automobile.

3. Système selon l'une des revendications précédentes, l'au moins une application de programme informatique étant basée sur la Version 5 ou supérieure du langage de balisage hypertexte HTML.

4. Système selon l'une des revendications précédentes, un composant matériel externe au véhicule (13) comprenant un appareil portable doté d'au moins un processeur et d'une mémoire de données servant à exécuter l'au moins une application de programme informatique (32), notamment un ordinateur portable ou un Smartphone.

5. Système selon l'une des revendications précédentes, l'au moins un composant matériel externe au véhicule (13) comprenant un serveur Web externe au véhicule afin de pouvoir accéder depuis le véhicule, par le biais de l'interface (12), à des données ou des applications d'un service Internet mises à disposition par le serveur Web.

6. Système selon l'une des revendications précédentes, l'interface (12) étant configurée pour transmettre des données générées par une application de programme informatique (32) exécutée sur le composant matériel externe au véhicule (13) au composant matériel interne au véhicule (11), de sorte que les données générées puissent être reproduites par le biais du composant matériel interne au véhicule (11).

7. Système selon l'une des revendications précédentes, le dispositif étant configuré pour recevoir par le biais de l'interface (12) un réglage de configuration du composant matériel externe au véhicule (13), le réglage de configuration comprenant des informations à propos de l'au moins une application de programme informatique à exécuter et/ou des données multimédia à reproduire.

8. Système selon l'une des revendications précédentes, l'interface (12) étant mise à disposition par le premier environnement d'exécution et l'au moins un composant matériel externe au véhicule (13) et/ou le deuxième environnement d'exécution.

9. Système selon l'une des revendications précédentes, l'interface (12) étant basée sur le paradigme de programmation REST (Representational State Transfer) et au moins un protocole de réseau normalisé, notamment le HTTP et/ou le WebSocket.

10. Système selon l'une des revendications précédentes, possédant en outre : une mémoire de données interne au véhicule (33 ; 35) pour copier des données multimédias et/ou des applications de programme informatique du composant matériel externe au véhicule (13) dans la mémoire de données interne au véhicule dans le cas d'une absence de connectivité entre le composant matériel interne au véhicule (11) et le composant matériel externe au véhicule (13).

11. Procédé (40) de mise à disposition de données multimédia dans un véhicule automobile, lequel un composant matériel interne au véhicule (11) comprenant un premier système d'exploitation et comprenant un premier environnement d'exécution (31) destiné à la commutation entre au moins une application de programme informatique (32) et le premier système d'exploitation du composant matériel interne au véhicule (11), comprenant les étapes suivantes :
mise à disposition (41) d'une interface (12) entre le composant matériel interne au véhicule (11) et au moins un composant matériel externe au véhicule (13) comprenant un deuxième système d'exploitation et un deuxième environnement d'exécution destiné à la commutation entre la même application de programme informatique (32) et le deuxième système d'exploitation du composant matériel externe au véhicule (13) ; et
exécution (42) de l'application de programme informatique (32) soit sur le composant matériel interne au véhicule (11), soit sur le composant matériel externe au véhicule (13),
le composant matériel interne au véhicule (11) étant sélectionné lorsque les ressources matérielles du composant matériel interne au véhicule (11) sont suffisantes pour l'exécution de l'application de programme informatique (32), et sinon le composant matériel externe au véhicule (13) étant sélectionné ;
le composant matériel interne au véhicule (11) étant sélectionné en fonction de l'autonomie de la batterie du composant matériel externe au véhicule (13).

12. Programme informatique destiné à exécuter au moins une étape du procédé (40) selon la revendication 11 lorsque le programme informatique est exécuté sur un composant matériel programmable.
